# EUROPEAN PATENT SPECIFICATION

(11) **EP 1 215 536 B1**
(45) Date of publication and mention of the grant of the patent: **23.01.2008**
(21) Application number: 01129379.2
(22) Date of filing: 18.12.2001
(51) Int. Cl.: G03G 15/00, B65H 3/06, H04N 1/00

(54) **Automatic document feeder and image forming apparatus using the same**
Automatisches Dokumentzuführgerät und Bilderzeugungsvorrichtung mit einem solchen Gerät
Dispositif automatique d'alimentation de documents et appareil de formation d'images correspondant

(30) Priority: 18.12.2000 JP 2000383865; 28.08.2001 JP 2001258572; 09.11.2001 JP 2001344817
(43) Date of publication of application: 19.06.2002
(73) Proprietor: Ricoh Company, Ltd., Tokyo 143-8555 (JP)
(72) Inventor: Sueoka, Hideki, Machida-shi, Tokyo (JP)
(74) Representative: Schwabe - Sandmair - Marx

(56) References cited:
- EP-A- 0 376 308
- EP-A- 0 762 719
- EP-A- 0 842 880
- US-A- 5 278 622
- US-A- 5 624 109
- PATENT ABSTRACTS OF JAPAN vol. 012, no. 445 (M-767), 22 November 1988 (1988-11-22) & JP 63 176231 A (MATSUSHITA ELECTRIC IND CO LTD;OTHERS: 01), 20 July 1988 (1988-07-20)

## Description

### BACKGROUND OF THE INVENTION

### Field of the Invention

The present invention relates to an ADF (Automatic Document Feeder) for feeding a document from a document tray with a pickup roller, which is movable between a stand-by position and a pickup position, and capable of driving separating means and conveying means with a single motor, and an image forming apparatus using the same.

### Description of the Background Art

An ADF has customarily been mounted on a copier, facsimile apparatus, a combined copy/facsimile machine or similar image forming apparatus . The ADF usually includes a pickup roller, a feed roller, and a reverse roller. While the pickup roller pays out a document from a document tray, the feed roller and reverse roller cooperate to separate the document from the other documents. Roller pairs for conveyance sequentially convey the document via a scanning position.

One of conventional ADFs includes a document feed unit on which a pickup roller and a feed roller are integrally mounted. The pickup roller is movable from a stand-by position to a pickup position for paying out a document from a document tray. The feed roller feeds the document paid out. An exclusive motor is assigned to the document feed unit and angularly moves it between the stand-by position and the pickup position independently of the other members via, e.g., a drive member and an electromagnetic clutch. The problem with this type of ADF is that when drive transmitting means interrupts drive transmission, the idle torque of the motor and drive member is not transferred to the document feed unit, preventing the pickup roller to be held at the stand-by position.

In a modern ADF, the pickup roller, feed roller and reverse roller are constructed into a unit, and so are the roller pairs for conveyance. A current trend is therefore toward driving such units with a single motor for cost reduction. However, it is necessary to convey the document separated by the feed roller and reverse roller to the scanning position while preventing it from entraining the other documents. A single motor therefore does not have to constantly drive the roller pairs or the feed roller. In light of this, an electromagnetic clutch is positioned between the feed roller and the motor. As soon as one document is separated from the other documents, the clutch is uncoupled to interrupt drive transmission from the motor to the feed roller. This allows a single motor to optimally drive the roller pairs for conveyance and feed roller each functioning in a particular way.

The temperature of an electromagnetic clutch rises with an increase in a duty ratio, i.e., an ON/OFF time, accelerating the deterioration of the clutch. This lowers the durability of the clutch and increases the cost necessary for replacement. To reduce the temperature elevation of the clutch, it is a common practice to uncouple the clutch at suitable timing while the motor is in forward rotation (direction of document feed). This kind of scheme, however, brings about the following problems.

While the clutch is held uncoupled, the feed roller remains in a halt. As a result, the interval between the trailing edge of a document separated and the leading edge of a document to follow increases, increasing the total amount of conveyance and therefore the conveying time. The conveying time, of course, increases with an increase in the number of pages and therefore increases the copying time and facsimile data transmitting time. This problem is particularly serious with facsimile data transmission because the destination determines that an error has occurred when not receiving the next document data within a preselected period of time.

A sensor may be positioned downstream of the feed roller in order to again couple the clutch as soon as the sensor senses the trailing edge of a document just separated from the other documents. The sensor, however, increases the number of sensors and therefore the cost of the ADF. Moreover, when a space for locating such a sensor is not available for layout reasons, it is impossible to sense the trailing edge of the document.

Technologies relating to the present invention are disclosed in, e.g., Japanese Patent Laid-Open Publication No. 2000-53262 and Japanese Patent No. 3,025,915.

EP 0 842 880 A2 relates to a stack sheet supplying apparatus for supplying stacked sheet one by one from an uppermost one and an image reading apparatus having such a sheet supplying apparatus.

EP 0 376 308 A2 relates to a sheet feeding apparatus adapted to feed a sheet to an image forming portion of an image reading portion of an image processing system such as a copying machine, facsimile, printer and the like.

US-A-5,118,089 relates to improvement of an automatic document feeding apparatus mounted on a recording apparatus of an electrophotographic reproducing machine and others.

### SUMMARY OF THE INTENTION

It is a first object of the present invention to provide an ADF capable of driving a document feed unit independently of the other members and maintaining a pickup roller at a stand-by position even when the transmission of the idle torque of a motor and a drive member is interrupted, and an image forming apparatus using the same.

It is a second object of the present invention to provide a low-cost ADF capable of minimizing an interval between consecutive documents while reducing the deterioration of an electromagnetic clutch to thereby reduce the conveying time, and an image forming apparatus using the same.

In order to achieve the above-mentioned objects, there is provided an ADF (Automatic Document Feeder) according to claim 1. Advantageous embodiments are defined by the dependent claims.

An image forming apparatus including the ADF described above is also disclosed.

### BRIEF DESCRIPTION OF THE DRAWINGS

The above and other objects, features and advantages of the present invention will become more apparent from the following detailed description taken with the accompanying drawings in which:
FIG. 1 is a fragmentary isometric view showing a conventional ADF;
FIG. 2 is a perspective view showing a document feed unit included in the conventional ADF;
FIG. 3 is a side elevation showing a facsimile apparatus including an ADF embodying the present invention;
FIG. 4 is a fragmentary perspective view showing part of the illustrative embodiment;
FIG. 5 is a fragmentary perspective view showing a document feed unit included in the illustrative embodiment;
FIG. 6 is a fragmentary perspective view showing the illustrative embodiment;
FIG. 7 is a fragmentary perspective view showing the illustrative embodiment;
FIG. 8 is a side elevation showing facsimile apparatus including a modified form of the ADF;
FIG. 9 is a block diagram schematically showing a control system included in the modified ADF;
FIG. 10 is a flowchart demonstrating a specific operation of the modified ADF embodiment;
FIG. 11 is a view showing an alternative embodiment of the present invention;
FIG. 12 is a schematic block diagram showing a control system included in the alternative embodiment;
FIG. 13 is a fragmentary perspective view of the alternative embodiment;
FIG. 14 is a perspective view showing a driveline assigned to a feed roller and a pickup roller included in the alternative embodiment;
FIG. 15 is a flowchart demonstrating a specific procedure to be executed by the alternative embodiment in a facsimile data transmission mode;
FIG. 16 is a timing chart associated with FIG. 15;
FIG. 17 is a flowchart demonstrating a specific procedure to be also executed by the alternative embodiment in a copy mode; and
FIG. 18 is a timing chart associated with FIG. 17.

### DESCRIPTION OF THE PREFERRED EMBODIMENTS

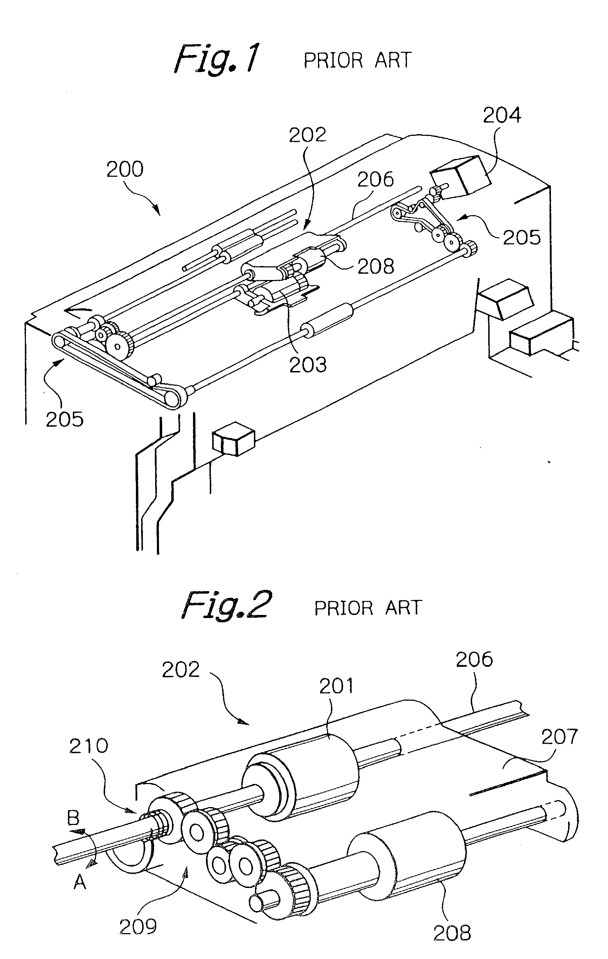

A preferred embodiment of the ADF in accordance with the present invention and mainly directed toward the first object will be described hereinafter. First, to better understand the present invention, reference will be made to a conventional ADF, shown in FIGS. 1 and 2. As shown, the ADF, generally 200, includes a document feed unit 202 including a feed roller 201 for paying out a document from a document tray. A reverse roller 203 faces the feed roller 201 and separates a single document from the other documents. A motor 204 drives the feed roller 201 and reverse roller 203. A drive transmission mechanism or drive member 205 includes gears, a belt and shafts for transmitting the output torque of the motor 204 to the feed roller 201 and reverse roller 203.

As shown in FIG. 2, the document feed unit 202 includes a drive shaft 206 on which the feed roller 201 is mounted. The drive shaft 206 supports a bracket 207 such that the bracket 207 is angularly movable. A pickup roller 208 is journalled to the bracket 207 and rotatable in interlocked relation to the feed roller 201 in the same direction. A drive transmission mechanism or drive member 209 includes gears for transmitting the rotation of the drive shaft 206 to the pickup roller 208. A spring clutch 210 transfers the rotation of the drive shaft 206 to the bracket 207.

The drive shaft 206 selectively rotates the feed roller 201 in a forward direction or document feed direction A or a reverse direction B. At the same time, the drive shaft 206 selectively causes the bracket 207 to angularly move in the forward direction A or the reverse direction B via the spring clutch 210.

When the drive shaft 206 rotates in the forward direction A, the spring clutch 210 is loosened. As a result, a torque derived from friction acting between the drive shaft 206 and the spring clutch 210 is transferred to the bracket 207, pressing the pickup roller 208 against a document with a preselected force. When the drive shaft 206 rotates in the reverse direction B, the spring clutch 210 is tightened so as to transfer the rotation of the drive shaft 206 to the bracket 207. The pickup roller 208 is selectively movable between a document feed position where it contacts the document and a stand-by position where the former is spaced from the latter.

In operation, the output torque of the motor 204 is transmitted to the drive shaft 206 via the drive transmission mechanism 205, causing the drive shaft 206 to rotate in the forward direction A. The drive shaft 206 then rotates the feed roller 201 and pickup roller 208 in the forward direction A and moves the bracket 207 in the direction A, so that the pickup roller 208 is brought to the document feed position. On contacting the top document of a document stack laid on the document tray, the pickup roller 208 pays out the document to a nip between the feed roller 201 and the reverse roller 203. The feed roller 201 feeds the document to a document path, not shown, while the reverse roller 203 separates the document from the underlying documents.

After the ADF 200 has fed all of the documents from the document tray, the drive transmission mechanism 205 transmits the rotation of the motor 204 to the drive shaft 206 so as to rotate it by a preselected angle in the reverse direction B. The drive shaft 206 then rotates the bracket 207 in the reverse direction B to thereby return the pickup roller to the stand-by position. In this condition, the idle torque of the motor 204 and drive transmission mechanism 205 (holding torque hereinafter) holds the document feed unit 202 including the pickup roller 208 in the stand-by position until the next document feed.

Generally, the holding torque of the ADF 200 is sufficiently greater than rotation torque derived from the weight of the document feed unit 202. The pickup roller 208 can therefore be maintained in the stand-by position without the document feed unit 202 dropping. It follows that the next stack of documents can be easily set on the document tray without being obstructed by the pickup roller 208.

The ADF described above has the following problem left unsolved. Assume that an electromagnetic clutch or similar drive transmitting member is mounted on the drive shaft 206 in order to control the drive of the document feed unit 202 independently of the other members. Then, when the drive transmitting member interrupts drive transmission, the idle torque of the motor 204 and drive shaft 206 is not transmitted to the document feed unit 202. This prevents the pickup roller 208 from being held at the stand-by position.

Referring to FIGS . 3 through 7, a facsimile apparatus including an ADF embodying the present invention will be described. Of course, the illustrative embodiment is applicable to any other image forming apparatus of the type including a document scanning section, e.g., a copier or a scanner.

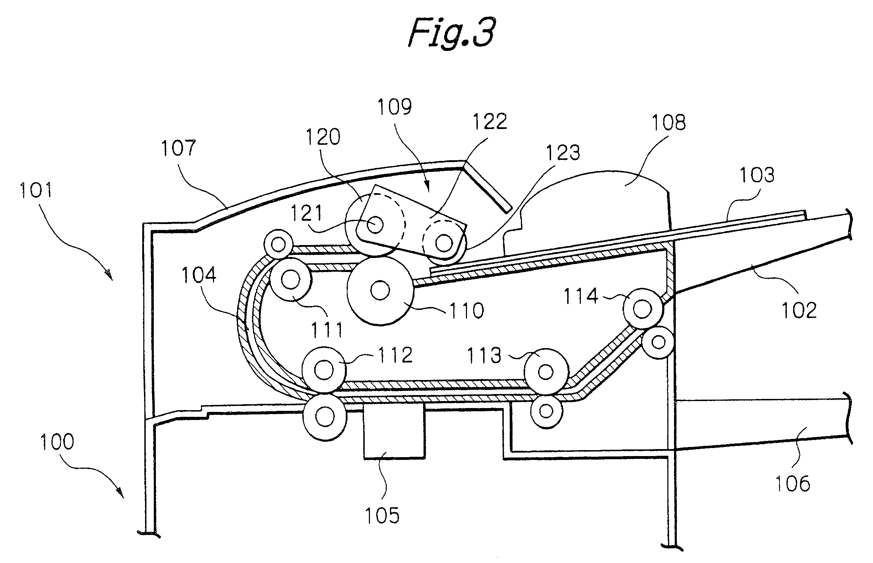

As shown in FIG. 3, the ADF, generally 101, is mounted on the top of a facsimile apparatus 100 and includes a document tray 102. The ADF 101 sequentially feeds documents 103 stacked on the document tray 102 to a scanning section 105 one by one along a document path 104. The ADF 101 discharges the document 103 scanned by the scanning section 105 to a tray 106.

More specifically, the ADF 101 includes an ADF body 107 including a casing and a cover. A pair of side fences 108 (only one is visible) guide a stack of documents 103 set on the document tray 102 in the widthwise direction of the documents 103. A document feed unit 109 includes a feed roller 120 and a drive shaft 121 for feeding the documents one by one. A reverse roller 110 faces the feed roller 120 for separating the top document from the other documents underlying it. Roller pairs 111, 112 and 113 convey the document 103 fed from the document tray 102 in a preselected direction. An outlet roller pair 114 drives the document 103 scanned by the scanning section 105 out of the ADF body 101 to the tray 106.

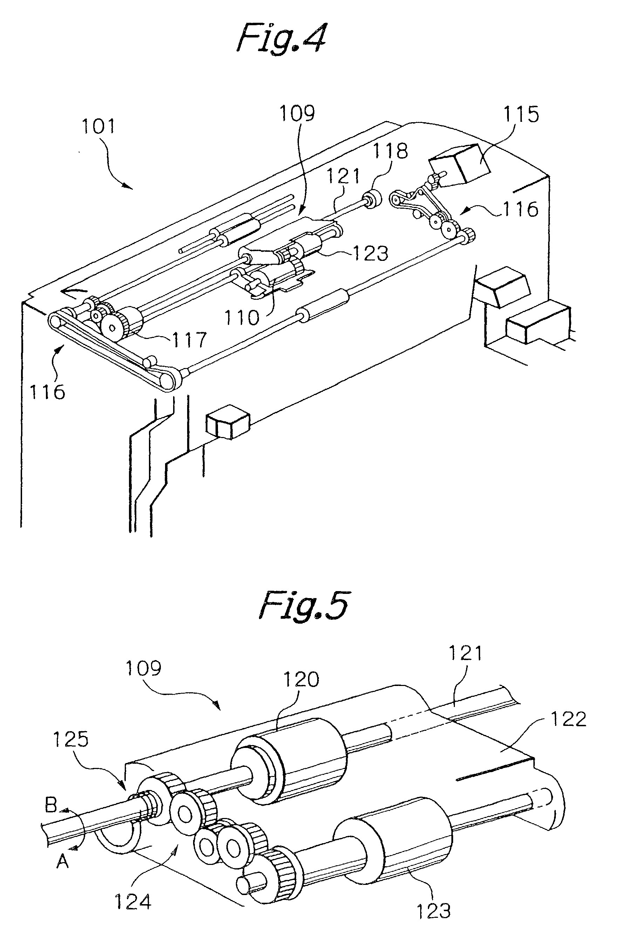

As shown in FIG. 4, a motor 115 drives the feed roller 120 and reverse roller 110 via a drive transmission mechanism or drive member 116, which includes gears, a belt and shafts. An electromagnetic clutch 117 intervenes between the drive transmission mechanism 116 and drive shaft 121 for transmitting the output torque of the motor 115 to the drive shaft 121. A torque limiter or holding means 119 transfers a preselected torque to the drive shaft 121.

As shown in FIG. 5, the document feed unit 109 includes a drive shaft 121 on which the feed roller 120 is mounted. The drive shaft 121 supports a bracket 122 such that the bracket 122 is angularly movable. A pickup roller 123 is journalled to the bracket 122 and rotatable in interlocked relation to the feed roller 120 in the same direction. A drive transmission mechanism or drive member 124 includes a plurality of gears for transmitting the rotation of the drive shaft 121 to the pickup roller 123. A spring clutch 125 transfers the rotation of the drive shaft 121 to the bracket 122.

The drive shaft 121 selectively rotates the feed roller 120 in a forward direction or document feed direction A or a reverse direction B. At the same time, the drive shaft 121 selectively causes the bracket 122 to angularly move in the forward direction A or the reverse direction B via the spring clutch 125.

When the drive shaft 121 rotates in the forward direction A, the spring clutch 125 is loosened. As a result, a torque derived from friction acting between the drive shaft 121 and the spring clutch 125 is transferred to the bracket 122, pressing the pickup roller 123 against the top document 103 with a preselected force. When the drive shaft 121 rotates in the reverse direction B, the spring clutch 125 is tightened so as to transfer the rotation of the drive shaft 121 to the bracket 122.

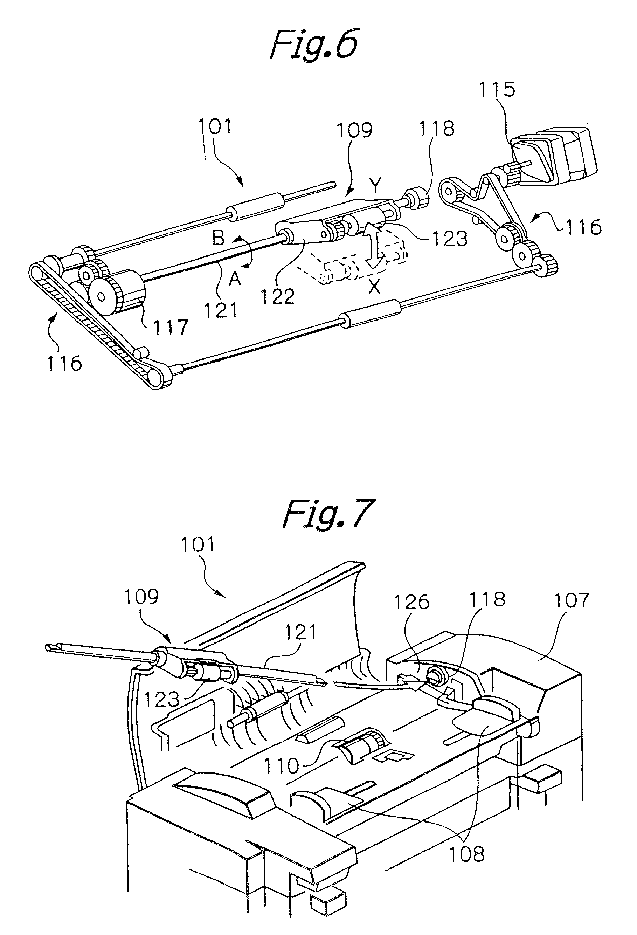

As shown in FIG. 6, the bracket 122 causes the pickup roller 123 to selectively move between a document feed position X where it contacts the document 103 and a stand-by position Y where it is spaced from the document 103.

The electromagnetic clutch 117, which intervenes between the drive transmission mechanism 116 and the drive shaft 121, controls the transfer of a driving force. More specifically, the clutch 117 sets up drive transmission from the drive transmission mechanism 116 to the drive shaft 121 when a control current fed thereto is in an ON state or interrupts the drive transmission when it is in an OFF state.

As shown in FIG. 7, the torque limiter 118 is locked to the drive shaft 121 and affixed to a side wall 126 forming part of the ADF body 107. The torque limiter 118 applies a preselected torque or holding torque for holding the pickup roller 123 at the standby position to the drive shaft 121. Further, the torque limiter 118 is implemented as a two-way torque limiter that applies a preselected torque to the drive shaft 121 in both directions. More specifically, the torque limiter 118 applies the holding torque to the drive shaft 121 when the drive shaft 121 is rotated in both of the forward direction A and reverse direction B. The holding torque is selected to be sufficiently greater than a torque derived from the weight of the document feed unit 109, so that the pickup roller 123 can be held at the stand-by position without the document feed unit 109 dropping.

In operation, the electromagnetic clutch 117 is coupled to connect the drive transmission mechanism 116 and drive shaft 121, so that the output torque of the motor 115 is transmitted to the drive shaft 121. As a result, the drive shaft 121 rotates in the forward direction A while causing the feed roller 120 and pickup roller 123 to rotate in the same direction A. At the same time, the drive shaft 121 causes the bracket 122 to angularly move in the forward direction A, moving the pickup roller 123 to the document feed position X. On contacting the top document 103, the pickup roller 123 pays out the top document 103 to a nip between the feed roller 120 and the reverse roller 110. The reverse roller 110 separates the top document 103 from the other documents 103 underlying it. The feed roller 120 conveys the document 103 to a document path 104.

After the ADF 101 has fed all of the documents 103 from the document tray 102, the electromagnetic clutch 11 7 connects the drive transmission mechanism 116 and drive shaft 121. As a result, the output torque of the motor 115 is transmitted to the drive shaft 121, causing the drive shaft 121 to rotate by a preselected angle in the reverse direction B. Further, the drive shaft 121 rotates the bracket 122 in the reverse direction in order to move the pickup roller 123 to the stand-by position Y. Subsequently, the electromagnetic clutch 117 is uncoupled to disconnect the drive shaft 121 from the drive transmission mechanism 116. The holding torque available with the torque limiter 118 holds the pickup roller 123 at the stand-by position Y until the next document feed.

As stated above, in the illustrative embodiment, the electromagnetic clutch 117 selectively connects or disconnects the drive transmission mechanism 116 and drive shaft 121 as to drive transmission. This allows the drive of the document feed unit 109 to be controlled independently of the other members. The torque limiter 118 allows the pickup roller 123 to remain at the stand-by position Y even when the electromagnetic clutch 117 interrupts drive transmission to the drive shaft 121. At the same time, the torque limiter 118 promotes easy, low-cost production of the ADF 101. In addition, the torque limiter 118, which is a two-way torque limiter, applies the holding torque to the drive shaft 121 and therefore does not limit the drive direction of the pickup roller 120.

Further, in the illustrative embodiment, the pickup roller 123 held at the stand-by position Y allows the next stack of documents to be easily set on the document tray 102.

If desired, a one-way torque limiter may be positioned between the drive shaft 121 and the torque limiter 118 such that the one-way torque limiter idles when the drive shaft 121 is rotated in the forward direction A. Further, the two-way torque limiter or holding means 118 may be replaced with a spring or an electromagnet so long as it is capable of applying the preselected torque to the drive shaft 121.

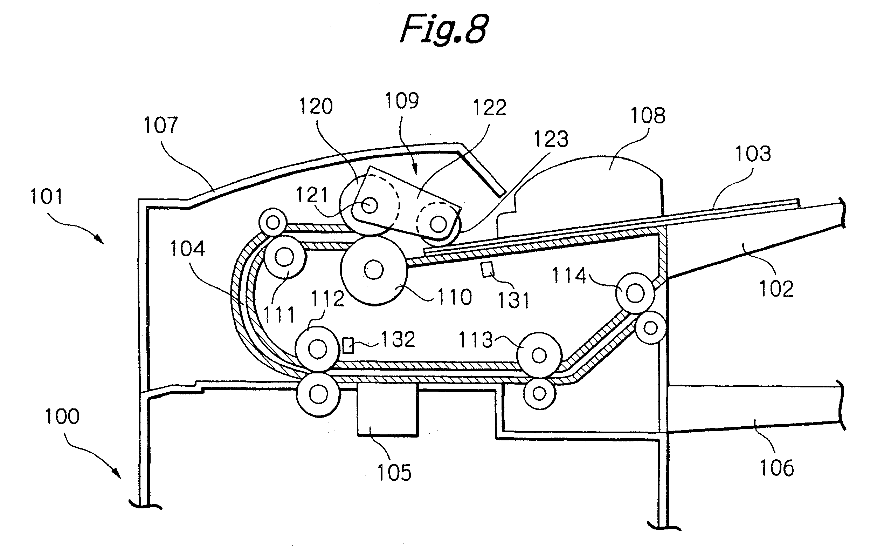

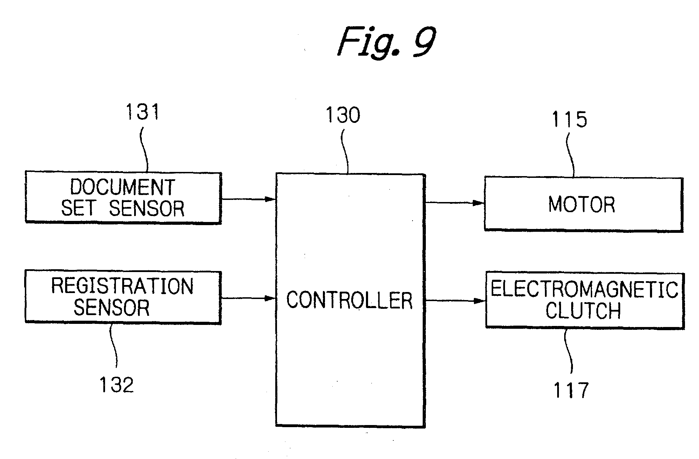

Reference will be made to FIGS. 8 through 10 for describing a facsimile apparatus including a modification of the illustrative embodiment. As shown in FIGS. 8 and 9, the modified ADF 101 includes a document set sensor 131 for outputting a signal indicative of whether or not the documents 103 are present on the document tray 103. A registration sensor 132 is positioned upstream of the scanning section 105 in the direction of document feed and responsive to the leading edge and trailing edge of the document 103, which is conveyed along the document path 104. A controller 130 controls the various devices in accordance with signals output from the sensors 131 and 132. As for the rest of the configuration, the modification is identical with the illustrative embodiment.

In the modified ADF 101, the output torque of the motor 115 is transmitted to the feed roller 120, pickup roller 123 and reverse roller 110 via the drive transmission mechanism 116 and electromagnetic clutch 117, At the same time, the output torque is transmitted to the roller pairs 111 and 112 via drive members not shown.

The bracket 122 angularly movably supported by the drive shaft 121 plays the role of a support member. In the modified ADF 101, the support member includes two side walls to which the shaft of the pickup roller 123 is journalled. Alternatively, the support member may be implemented by a member supporting one end of the shaft of the pickup roller 123 or a plurality of members supporting the shaft at a plurality of positions . The crux is that the support member angularly movably supports the pickup roller 123.

The spring clutch 125 for transmitting the rotation of the drive shaft 121 to the bracket 122 constitutes first drive transmitting means. While the first drive transmitting means is implemented as a spring clutch in the illustrative embodiment, it may be replaced with, e.g., a torque limiter, if desired. On the other hand, the electromagnetic clutch 117 for transmitting the output torque of the motor 115 to the drive shaft 121 constitutes second drive transmitting means.

The two-way torque limiter 118 serves as holding means for holding the pickup roller 123. The two-way torque limiter 118 may, of course, be replaced with any other suitable holding means, e.g., a spring for resiliently supporting the pickup roller 123 or a member for selectively locking the roller 123.

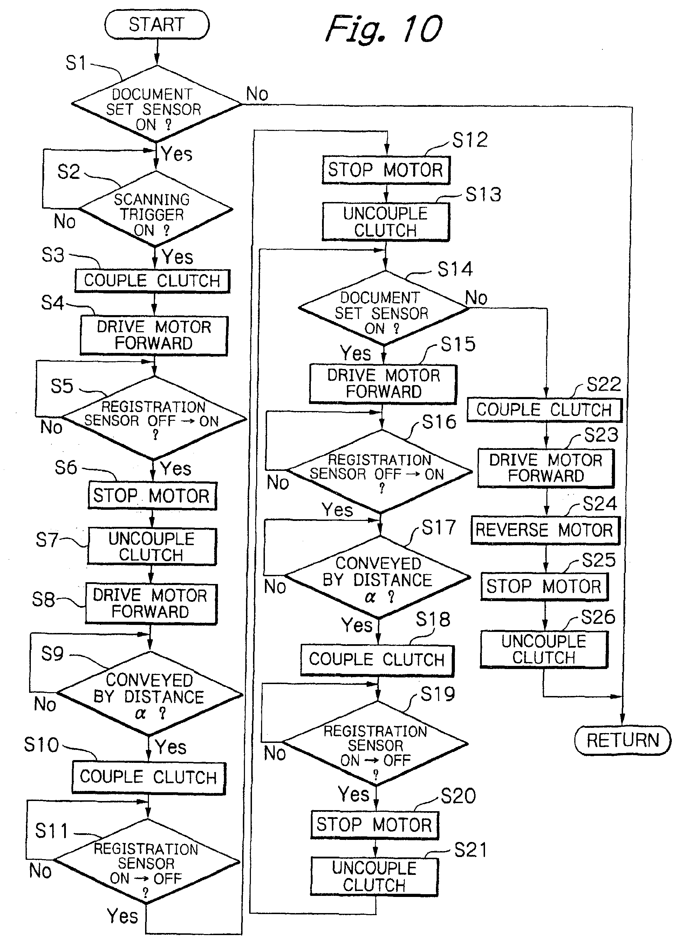

A specific operation of the modified ADF 101, more specifically controller 130, will be described with reference to FIG. 10. Assume that documents of size A4 are fed in a short edge feed position, i.e., with their short edges being positioned perpendicularly to the document feed direction by way of example.

Before the start of document feed, the holding torque of the torque limiter 118 maintains the document feed unit 109 including the pickup roller 123 at the stand-by position Y, so that the documents 103 can be stacked on the document tray 102. First, the controller 130 determines whether or not the documents 103 are stacked on the document tray 102, i.e., whether or not the document set sensor 131 is in an ON state (step S1). If the answer of the step S1 is negative (No), then the controller 130 ends the procedure. If the answer of the step S1 is positive (Yes), then the controller 130 determines whether or not a scanning start trigger is in an ON state, e.g., whether or not the operator has pressed a start button on an operation panel, not shown, (step S2). If the answer of the step S2 is Yes, then the controller 130 couples the electromagnetic clutch 117 (step S3).

Subsequently, the controller 130 drives the motor 115 in the forward direction in order to rotate the drive shaft 121 in the forward direction A (step S4). The drive shaft 121, in turn, rotates the feed roller 120 and pickup roller 123 in the forward direction A while driving the bracket 122 in the same direction A. As a result, the pickup roller 123 is moved from the stand-by position to the document feed position X. The pickup roller 123 then pays out the top document 103 to the nip between the feed roller 120 and the reverse roller 110.

The feed roller 120 and reverse roller 110 feed the top document 103 to the document path 104 while separating it from the other documents 103 underlying the top document 103. The roller pairs 111 and 112 to which the torque of the motor 115 is also transferred sequentially convey the document 103 fed by the feed roller 120 and reverse roller 110 toward the scanning section 105.

After the step S4, the controller 130 determines whether or not the registration sensor 132 has sensed the leading edge of the document 103, i.e., whether or not the sensor 132 is in an ON state (step S5). If the answer of the step S5 is Yes, the controller 130 uncouples the electromagnetic clutch 117 (step S7) and then drives the motor 115 in the forward direction (step S8). The roller pairs 111 and 112 therefore again convey the document 103 while the scanning section 105 starts scanning the document 103.

The controller 130 determines whether or not the document 103 has been conveyed by a preselected distance α after the turn-on of the registration sensor 132 (step S9). More specifically, the controller 130 determines whether or not a period of time necessary for the document 103 to be conveyed by the distance α has elapsed. If the answer of the step S9 is Yes, then the controller 130 couples the electromagnetic clutch 117 (step S10). The clutch 117 is therefore continuously uncoupled from the step S7 to the step S10. The distance α is selected such that, while the clutch 117 is held in the uncoupled state, the interval between the trailing edge of the preceding document 103 and the leading edge of the following document 103, which begins to be paid out in the step S19, is short.

For example, as for a document of size A4 fed in the short edge feed position, the distance α is selected to be 130 mm. The electromagnetic clutch 117 is held in the uncoupled state until a period of time necessary for the document to be conveys by 130 mm elapses. The clutch 117 is then coupled. This successfully reduces the distance between the trailing edge of the preceding document and the leading edge of the following document.

Subsequently, the controller 130 determines whether or not the registration sensor 132 has sensed the trailing edge of the document 103, i.e., whether or not the sensor 132 is in an OFF state (step S11). If the answer of the step S11 is Yes, then the controller 130 ends the scanning of the document 103 and stops driving the motor 115 in a preselected period of time (step S12) and then uncouples the electromagnetic clutch 117 (step S13).

After the step S13, the controller 130 determines whether or not another document 103 is present on the document tray 102, i.e., whether or not the document set sensor 131 is in an ON state (step S14). If the answer of the step S14 is Yes, then the controller 130 drives the motor 115 in the forward direction to thereby convey the document 103 in the same manner (step S15). The controller 130 then determines whether or not the registration sensor 132 has sensed the leading edge of the above document 103, i.e., whether or not the registration sensor 132 is in an ON state (step S16).

If the answer of the step S16 is Yes, then the controller 130 determines whether or not the document 103 has been conveyed by the distance α after the turn-on of the registration sensor 132, i.e., whether or not the period of time necessary for the document 103 to be conveyed by the distance α has elapsed (step S17). If the answer of the step S17 is Yes, then the controller 130 couples the electromagnetic clutch 117 (step S18). The clutch 117 is therefore held in the uncoupled state from the step S13 to the step S18. The distance α is selected such that, while the clutch 117 is held in the uncoupled state, the interval between the trailing edge of the preceding document 103 and the leading edge of the following document 103, which begins to be paid out in the step S18, is short.

Subsequently, the controller 130 determines whether or not the registration sensor 132 has sensed the trailing edge of the following document 103, i.e., whether or not the sensor 132 is in an OFF state (step S19). If the answer of the step S11 is Yes, then the controller 130 ends the scanning of the document 103 and stops driving the motor 115 in a preselected period of time (step S20) and then uncouples the electromagnetic clutch 117 (step S21). Thereafter, the controller 130 repeats the steps S14 through S21 until all the documents 103 have been fed from the document tray 102.

Assume that the answer of the step S14 is No, i.e., the document set sensor 131 is in an OFF state. Then, the controller 130 couples the electromagnetic clutch 117 (step S22) and drives the motor 115 in the forward direction (step S23) for thereby discharging the document 103 remaining in the ADF 101 to the tray 106.

Subsequently, the controller 130 drives the motor in the reverse direction for causing the drive shaft 121 to rotate by a preselected angle in the reverse direction B (step S24). The drive shaft 121 angularly moves the bracket 122 in the direction B to thereby return the pickup roller 123 from the document feed position X to the stand-by position Y. The controller 130 then stops driving the motor 115 (step S25) and turns off the electromagnetic clutch 117 (step S26). This is the end of the procedure shown in FIG. 10. In this condition, the holding torque of the torque limiter 118 holds the document feed unit 109 including the pickup roller 123 at the stand-by position Y until the next document feed.

As stated above, the illustrative embodiment and modification thereof can control the drive of the document feed unit 109 independently of the other members of the ADF 101. In addition, the ADF 101 can hold the pickup roller 123 at the stand-by position even when the transmission of the idle torque of the motor and drive mechanism is interrupted.

An alternative embodiment of the present invention, which is mainly directed coward the second embodiment stated earlier, will be described hereinafter. While the following description will also concentrate on a combined copy/facsimile machine, the illustrative embodiment is similarly applicable to any other image forming apparatus, e.g., a facsimile apparatus, a copier or a scanner.

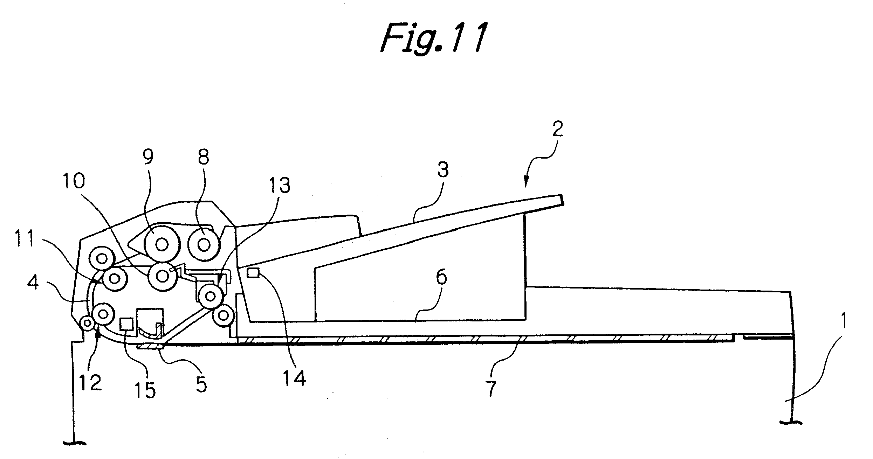

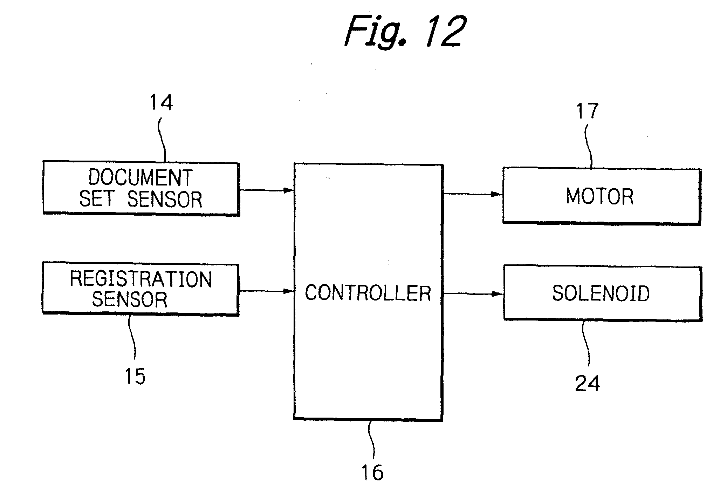

Referring to FIGS. 11 and 12, an ADF 2 is mounted on rhe top of a multifunction machine 1. The ADF 2 pays out a single document from a document tray 3 while separating it from the other documents, conveys the document to a slit glass (scanning position) 5 along a document path 4, and then discharges the document having been scanned to a tray 6.

A glass platen 7 is positioned at the right-hand side of the slit glass, as viewed in FIG. 11. After a document has been laid on the glass platen 7 by hand, a scanning device positioned below the glass platen 7 and slit glass 5 moves its light source, mirrors and so forth for scanning the document, although not shown specifically. On the other hand, to read a document being conveyed via the slit glass 5, the light source, a lens and so forth included in the scanning device are held in a halt below the slit glass 5. A CCD (Charge Coupled Device) image sensor, for example, converts image information read by the scanning device to an electric signal.

A pickup roller 8 is positioned downstream of the document tray 3 in the direction of document feed. The pickup roller 8 is movable between a pickup position where it contacts the top of a document stack set on the document tray 3 and a stand-by position where the former is spaced from the latter upward. A solenoid 24 moves the pickup roller 8 between the above two positions.

A feed roller 9 is rotatable clockwise, i.e., in a direction for paying out a document. A reverse roller 10 is rotatable clockwise, i.e., in a direction for obstructing the pay-out of the document in contact with the feed roller 9. As a result, the top document of a document stack is paid out while being separated from the underlying documents. Roller pairs 11 and 12 sequentially convey the document along the document path 4 via the slit glass 5. An outlet roller pair 13 discharges the document scanned by the scanning device to a tray 6.

In the illustrative embodiment, the pickup roller 8, feed roller 9 and reverse roller 10 constitute separating means while the roller pairs 11, 12 and 13 constitute conveying means.

A document set sensor 14 is positioned on the document tray 3 and determines whether or not documents are present on the tray 3. The output of the document set sensor 14 is sent to a controller 16. A registration sensor 15 is positioned downstream of the slit glass 5 in the direction of document feed and responsive to the leading and trailing edges of a document. The output of the registration sensor 15 is also sent to the controller 16.

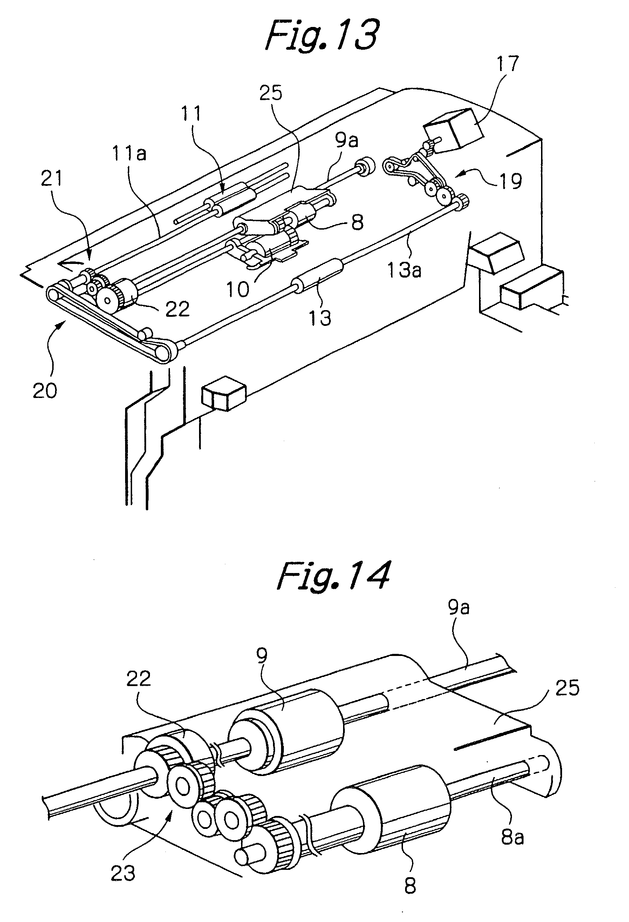

In the illustrative embodiment, a single motor 17 drives both of the separating means and conveying means. A driveline particular to the illustrative embodiment will be described with reference to FIGS. 13 and 14. As shown, the output shaft of the motor 17 is connected to a drive transmission mechanism or drive member 19 including gears, a belt and shafts. The drive transmission mechanism 19 is, in turn, connected to a drive shaft 13a on which one roller or drive roller of the outlet roller pair 13 is mounted, thereby transmitting the output torque of the motor 17 to the outlet roller pair 13. A belt 20 connects the shaft 13a to a shaft 11a on which one roller or drive roller of the roller pair 11 is mounted, so that the output torque of the motor 17 is transferred to the roller pair 11 via the belt 20.

Further, the shaft 11a is connected to the shaft 9a of the feed roller 9 via a drive transmission mechanism or drive member 21, which includes gears, and an electromagnetic clutch 22. As shown in FIG. 14, the shaft 8a is connected to the shaft 8a of the pickup roller 8a via a drive transmission mechanism or drive member 23 including gears. The drive transmission mechanism 23 is connected to the reverse roller 10 and roller pair 12 via gears as well.

In the above configuration, when the electromagnetic clutch 22 is coupled, the rotation of the motor 17 is transmitted to the feed roller 9 via the shaft 13a of the outlet roller pair 13, belt 20, shaft 11a of the roller pair 11, and drive transmission mechanism 21. At the same time, the rotation of the motor 17 is transmitted from the feed roller 9 to the roller pair 12, reverse roller 10, and pickup roller 8. When the clutch 22 is uncoupled, the rotation of the motor 17 is not transmitted to any one of the feed roller 9, reverse roller 10, and pickup roller 8. As shown in FIGS. 13 and 14, the pickup roller 18 and feed roller 9 are mounted on a bracket 25 and rotatable integrally with each other.

When the registration sensor 15 senses the leading edge of a document, the controller 16 controls, in response to the output of the sensor 15, the scanning device such that the scanning device scans the document at optimum timing matching with the document conveying speed. Also, when the document is conveyed by a distance α, the controller 16 uncouples the electromagnetic clutch 22 only for a preselected period of time. The distance a corresponds to a preselected period of time to elapse since the registration sensor 15 has sensed the leading edge of the document.

In the illustrative embodiment, as for a document of size A4 fed in the short edge feed position, the distance α is selected to be about 130 mm. This distance sets up an optimally short interval between the trailing edge of the preceding document and the leading edge of the following document. The period of time *t* is optimally selected beforehand in accordance with the length of a document, e.g., a B5 short edge feed position or an A4 long edge feed position. The long edge feed position refers to a position in which the long edges of a document are perpendicular to the document feed direction. The distance α itself may be used in place of the period of time *t*, if desired.

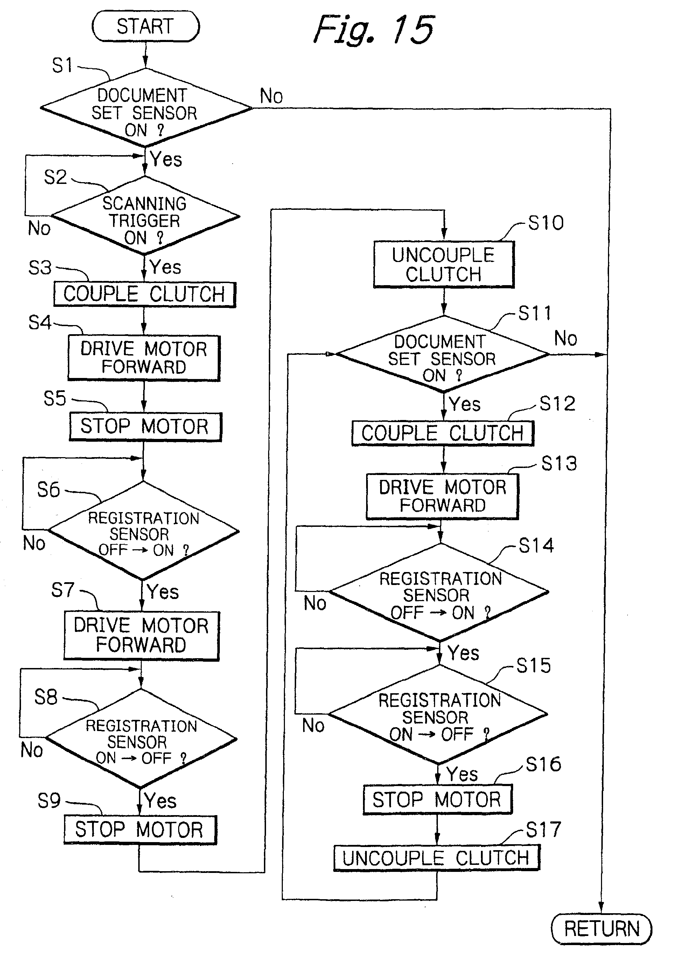

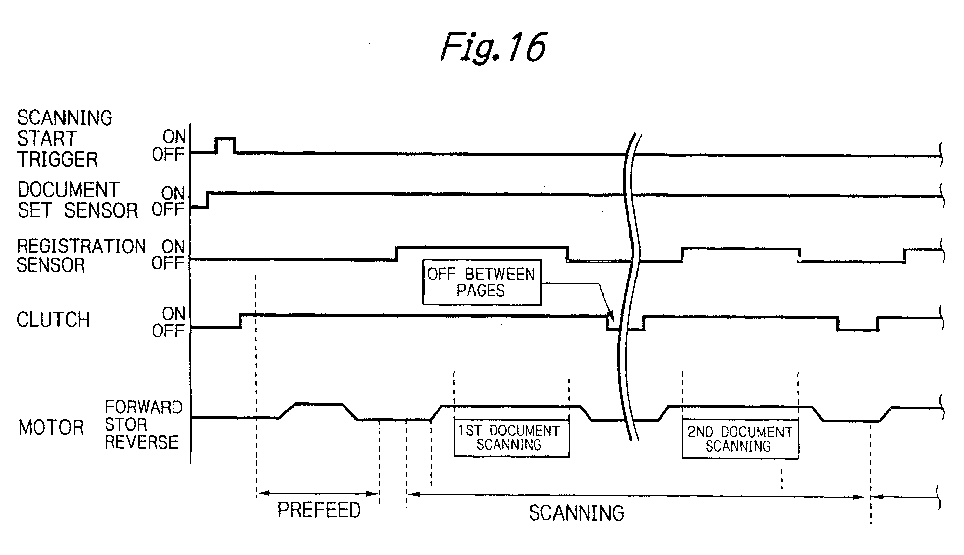

A specific operation of the illustrative embodiment will be described with reference to FIGS. 15 through 18. First, reference will be made to FIGS. 15 and 16 for describing the conveyance of documents particular to a facsimile data transmission mode. It is to be noted that the controller 16 distinguishes a copying operation and a facsimile data transmitting operation by referencing a signal input from the machine 1.

Assume that the operator of the machine 1 stacks documents on the document tray 3, inputs destination's phone number on an operation panel, not shown, and then presses a start button. Then, as shown in FIG. 15, the controller 16 determines whether or not the document sensor 14 is in an ON state (step S1). If the answer of the step S1 is Yes, then the controller 16 determines whether or not a scanning start trigger is in an ON state (step S2). If the answer of the step S2 is Yes, then the controller 16 couples the electromagnetic clutch 22 (step S3).

Subsequently, the controller 16 drives the motor 17 in the forward direction, i.e., in the document feed direction (step S4). At this instant, the controller 16 energizes the solenoid 24 to thereby move the pickup roller 8 from the stand-by position to the pickup position. At the same time, the rotation of the motor 17 is transferred to the pickup roller 8, causing the roller 8 to pay out the top document.

The rotation of the motor 17 is transferred to the feed roller 9 and reverse roller 10 as well. The feed roller and reverse roller 10 therefore cooperate to separate the top document from the underlying documents. Further, the rotation of the motor 17 is transferred to the roller pairs 11 and 12, causing the roller pairs 11 and 12 to convey the document along the document path 4.

Subsequently, the controller 16 interrupts the rotation of the motor 17 (step S5) and then determines whether or not the registration sensor 15 is in an ON state (step S6). If the answer of the step S6 is Yes, then the controller 16 again drives the motor 17 in the forward direction (step S7). Consequently, the scanning device starts scanning the document in synchronism with the turn-on of the registration sensor 15.

After the step S7, the controller 16 determines whether or not the status of the registration sensor 15 has changed from ON to OFF (step S8). If the answer of the step S8 is Yes, then the controller 16 determines that the sensor 15 has sensed the trailing edge of the document, and stops driving the motor 17 (step S9) and then uncouples the electromagnetic clutch 22 only for a preselected period of time (step S10). Turning off the motor 17 and clutch 22 for the preselected period of time does not effect conveyance at all because one page is scanned and because a certain period of time is necessary for the interchange of protocol with the destination.

Subsequently, the controller 16 determines whether or not the document set sensor 14 is in an ON state, i.e., whether or not another document is present on the document tray 3 (step S11). If the answer of the step S11 is Yes, then the controller 16 again couples the electromagnetic clutch 22 (step S12) and then drives the motor 17 in the forward direction (step S13). As a result, the next document is paid out from the document tray 14.

After the step S13, the controller 16 determines whether or not the status of the registration sensor 15 has changed from ON to OFF, i.e., whether or not the registration sensor has sensed the trailing edge of the document (step S15). If the answer of the step S15 is Yes, the controller 16 stops driving the motor 17 (step S16) and then uncouples the electromagnetic clutch 22 only for the preselected period of time (step S17). Again, turning off the motor 17 and clutch 22 for the preselected period of time does not effect conveyance at all because one page is scanned and because a certain period of time is necessary for protocol. Thereafter, the controller 16 repeats the steps S11 through S17 until all the documents have been fed from the document tray 3.

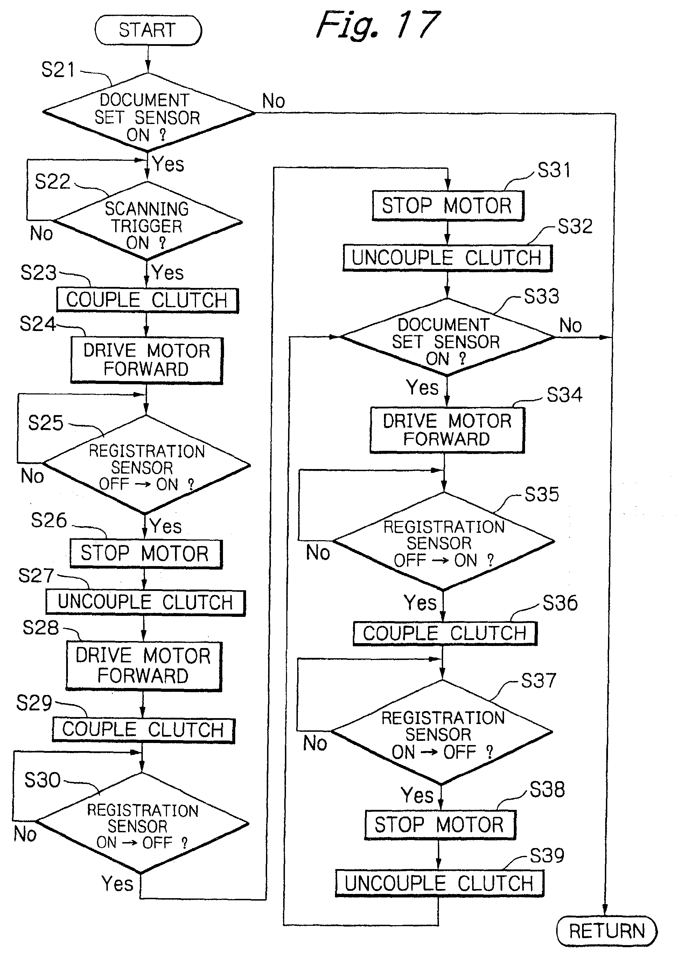

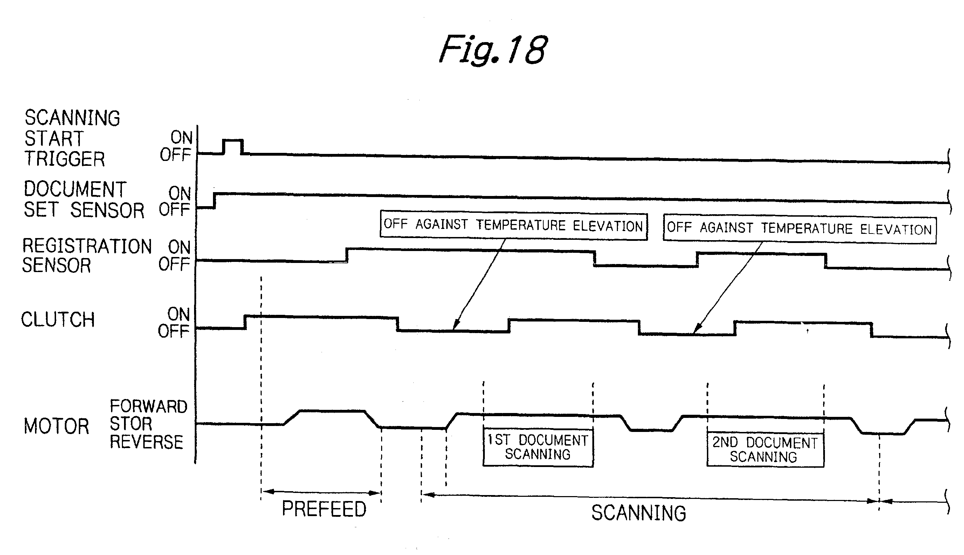

Reference will be made to FIGS. 17 and 18 for describing the conveyance of documents particular to a copy mode. Again assume that documents stacked on the document tray 3 are fed in the A4 short edge feed position.

As shown in FIG. 17, when the operator stacks documents on the document tray 3 and then presses the start button, the controller 16 determines whether or not the document sensor 14 is in an ON state (step S21). If the answer of the step S21 is Yes, then the controller 16 determines whether or not a scanning start trigger is in an ON state (step S22). If the answer of the step S22 is Yes, then the controller 16 couples the electromagnetic clutch 22 (step S23).

Subsequently, the controller 16 drives the motor 17 in the forward direction (step S24). At this instant, the controller 16 energizes the solenoid 24 to thereby move the pickup roller 8 from the stand-by position to the pickup position. At the same time, the rotation of the motor 17 is transferred to the pickup roller 8, causing the roller 8 to pay out the top document.

The rotation of the motor 17 is transferred to the feed roller 9 and reverse roller 10 as well. The feed roller and reverse roller 10 therefore cooperate to separate the top document from the underlying documents. Further, the rotation of the motor 17 is transferred to the roller pairs 11 and 12, causing the roller pairs 11 and 12 to convey the document along the document path 4.

Subsequently, the controller 16 determines whether or not the registration sensor 15 is in an ON state (step S25). If the answer of the step S25 is Yes, then the controller 16 interrupts the rotation of the motor 17 (step S26), uncouples the electromagnetic clutch 22 only for the preselected period of time (step S27), and again drives the motor 17 forward (step S28). It should be noted that the clutch 22 is uncoupled at the above timing only at the time of prefeed that separates the first document from the others.

On the elapse of the preselected period of time, the controller 16 again couples the clutch 22 (step S29). On the elapse of the period of time t since the registration sensor 15 has turned off on sensing the trailing edge of the document, the first document is fully read.

The controller 16 determines whether or not the period of time t corresponding to the distance α of 130 mm has elapsed since the registration sensor 15 has turned on (step S30). If the answer of the step S30 is Yes, then the controller 16 stops driving the motor 17 (step S31) and then uncouples the clutch 22 only for the preselected period of time (step S32).

After the step S32, the controller 16 determines whether or not the document set sensor 14 is in an ON state, i.e., whether or not another document is present on the document tray 3 (step S33). If the answer of the step S33 is Yes, then the controller 16 drives the motor 17 forward in order to feed the next document in the same manner as the first document (step S34). Subsequently, the controller 16 determines whether or not the registration sensor 15 is in an ON state (step S35). If the answer of the step S35 is Yes, then the controller 16 couples the clutch 22 (step S36) and then determines whether or not the period of time has elapsed since the registration sensor 15 has turned on (step S37). If the answer of the step S37 is Yes, then the controller 16 stops driving the motor 7 (step S38) and then uncouples the clutch 22 only for the preselected period of time (step S39).

The period of time *t* is selected such that when the clutch 22 is uncoupled and then coupled to start feeding the next document, the interval between the preceding document and the following document is short. As for the A4 short edge feed position, the clutch 22 is uncoupled over the period of time *t* corresponding to 130 mm and again coupled to thereby reduce the interval between the trailing edge of the preceding document and the leading edge of the following document. It is to be noted that when the clutch 22 is uncoupled, the top document is successfully prevented from entraining the underlying documents because the rotation of the motor 17 is transmitted to the reverse roller 10. Thereafter, the controller 16 repeats the steps S33 through S39 until all the documents have been fed from the document tray 3.

As stated above, in the illustrative embodiment, the controller 16 uncouples the electromagnetic clutch 22 for the preselected period of time when the preceding document is conveyed over the period of time t after the registration sensor 15 has sensed it. This not only reduces the interval between the consecutive documents, but also provides the clutch 22 with an OFF time to thereby protect the clutch 22 from deterioration. Further, it is not necessary to locate an exclusive document sensor downstream of the feed roller 9 and reverse roller 10 for uncoupling the clutch 22, so that the cost of the ADF 2 is reduced.

The controller 16 distinguishes facsimile data transmission and copying. In the event of facsimile data transmission, the controller 16 uncouples the clutch 22 in the manner described above. In the event of copying, the controller 16 uncouples the clutch 22 for the preselected period of time between the scanning of the preceding document and that of the following document. Such control available with the controller 16 is advantageous in the following respects.

First, in the facsimile data transmission mode, the controller 16 stops driving the motor 17 at the time of document scanning because the machine 1 must interchange protocol with the destination. During this period of time, the clutch 22 is uncoupled and therefore protected from deterioration. Second, a sufficient period of time can be assigned to the OFF state of the clutch 22. Therefore, the following document can be paid out immediately after the pay-out of the preceding document without the clutch 22 being uncoupled, i.e., without the copying operation being interrupted. This successfully reduces the document conveying time.

While the illustrative embodiment has concentrated on the A4 short edge feed position, it can, of course, convey document having any other lengths. That is, if the period of time *t* or the distance α is varied in accordance with the document length, an optimal interval between pages matching with the length of the document can be set up.

The length of a document is determined when the registration sensor 15 senses the leading edge and then the trailing edge of the document. The period of time *t* or the distance α is set in accordance with the determined length of the document. When documents of the same length are conveyed, the period of time *t* or the distance α initially set may be applied to the second and successive documents. This obviates the need for an exclusive sensor for determining the length of documents stacked on the document tray 3.

Alternatively, the operation panel may include a portion for allowing the operator to input a document length beforehand. This obviates the need for the exclusive sensor. In addition, the controller 16 can execute accurate control over the turn-off of the clutch 22 immediately after the pay-out of the first document.

The registration sensor or sensing means 15 is responsive to the leading edge and trailing edge of a document being conveyed via the slit glass 5 and can therefore be implemented by an existing sensor. This makes it needless to use an exclusive sensor for sensing the opposite edges of a document and thereby reduces the cost of the ADF 2.

Various modifications will become possible for those skilled in the art after receiving the teachings of the present disclosure without departing from the scope thereof.

## Claims

1. An ADF (Automatic Document Feeder) comprising:
a feed roller (120) for feeding a document (103) and
a drive shaft (121) for causing said feed roller (120) to rotate;
a support member (122);
a torque limiter (118);
a pickup roller (123) rotatable by being driven in interlocked relation to said feed roller (120), and movable, when said support member (122) is angularly moved, between a pickup position (X) where said pickup roller (123) contacts the document (103) and a stand-by position (Y) where said pickup roller (123) is spaced from said document (103);
an electromagnetic clutch (117) for transmitting the output torque of a drive source (115) to said drive shaft (121), wherein said drive shaft (121) supports a support member (122) angularly movably; and
wherein said pickup roller (123) is journalled to said support member (122);
wherein, when said pickup roller (123) is moved to the stand-by position (Y), said electromagnetic clutch (117) interrupts drive transmission to said drive shaft (121), **characterized in that** the torque limiter (118) is a two-way torque limiter which transfers a preselected torque to the drive shaft (121) and holds said pickup roller (123) at said stand-by position (Y) even when the electromagnetic clutch (117) interrupts drive transmission to the drive shaft (121),
wherein said torque limiter (118) is mounted on an ADF body (207) and applies the preselected torque to said drive shaft(121) when said drive shaft (121) is rotated in a forward direction (A) and a reverse direction (B).

2. The ADF as claimed in claim 1, further comprising:
wherein the pickup roller (8), the feed roller (9) and the reverse roller (10) represent a separating means for feeding one of a number of documents stacked on a document tray (3) while separating the one document from the other documents;
wherein the roller pairs (11, 12, 13) represent a conveying means for conveying the document separated by said separating means (8, 9, 10) to a scanning position (5);
a single drive source (17) for driving said separating means and said conveying means;
an electromagnetic clutch (22) positioned on a drive transmission path between said drive source (17) and said separating means and selectively coupled or uncoupled so as to set up or interrupt, respectively, drive transmission from said drive source (17) to said separating means;
a sensing means located upstream of a scanning position (5) in a document feed direction for sensing a leading edge and a trailing edge of the document (103); and
a control means (16) for uncoupling an electromagnetic clutch (22), after said sensing means has sensed the document separated by said separating means only for a preselected period of time when said document is conveyed by a preselected distance α or for a preselected period of time *t*.

3. The ADF as claimed in claim 2, wherein said sensing means comprises a registration sensor (15) responsive to the leading edge and the trailing edge of the document being conveyed to the scanning position (5).

4. The ADF as claimed in claim 2, further comprising inputting means for allowing an operator of said ADF to input a length of the document.

5. The ADF as claimed in claim 2, wherein said control means (16) determines a length of the document when said sensing means senses the leading edge and the trailing edge of a first document, sets the preselected distance α or the preselected period of time *t* in accordance with said length, and applies said distance α or said preselected period of time *t* to a second document and successive documents to be conveyed.

6. The ADF as claimed in claim 2, wherein said control means (16) varies the preselected distance α or the preselected period of time *t* in accordance with the length of the document.

7. The ADF as claimed in claim 2, wherein by distinguishing facsimile data transmission and copying, said control means (16) uncouples said electromagnetic clutch (22) in the event of copying or uncouples said electromagnetic clutch in the event of facsimile data transmission, only for a preselected period of time between scanning of a first document and scanning of a second document.

8. An image forming apparatus with an ADF as claimed in claims 1 to 7.

## Patentansprüche

1. ADF (automatische Dokumentzufiihrvornchtung), mit:
einer Zuführrolle (120), um ein Dokument (103) zuzuführen, und
einer Antriebswelle (121), um eine Drehung der Zuführrolle (120) zu veranlassen;
einem Tragteil (122);
einem Drehmomentbegrenzer (118);
einer Abnahmerolle (123), die drehbeweglich ist, sodass diese in gekoppelter Beziehung zu der Zuführrolle (120) angetrieben wird, und die dann, wenn das Tragteil (122) um einen Winkel bewegt bzw. verschwenkt wird, zwischen einer Abnahmestellung (X), in der die Abnahmerolle (123) das Dokument (103) berührt, und einer Bereitschaftsstellung (Y) bewegt werden kann, in der die Abnahmerolle (123) beabstandet zu dem Dokument (103) ist;
einer elektromagnetischen Kupplung (117), um das Ausgangs-Drehmoment einer Antriebsquelle (115) auf die Antriebswelle (121) zu übertragen, wobei die Antriebswelle (121) ein schwenkbewegliches Tragteil (122) trägt; und
wobei die Abnahmerolle (123) zu dem Tragteil (122) geschwenkt wird;
wobei dann, wenn die Abnahmerolle (123) zu der Bereitschaftsstellung (Y) bewegt wird, die elektromagnetische Kupplung (117) die Übertragung der Antriebskraft auf die Antriebswelle (121) unterbricht,
**dadurch gekennzeichnet, dass** der Drehmomentbegrenzer (118) ein Zweiwege-Drehmomentbegrenzer ist, der ein vorgewähltes Drehmoment auf die Antriebswelle (121) überträgt und die Abnahmerolle (123) selbst dann in der Bereitschaftsstellung (Y) hält, wenn die elektromagnetische Kupplung (117) die Übertragung der Antriebskraft auf die Antriebswelle (121) unterbricht,
wobei der Drehmomentbegrenzer (118) auf einem ADF-Körper (207) angebracht ist und auf die Antriebswelle (121) das vorausgewählte Drehmoment ausübt, wenn die Antriebswelle (121) in eine Vorwärtsrichtung (A) und in eine Rückwärtsrichtung (B) gedreht wird.

2. ADF nach Anspruch 1, weiterhin umfassend:
wobei die Abnahmerolle (8), die Zuführrolle (9) und die Umkehrrolle (10) ein Trennmittel darstellen, um ein Dokument von einer Anzahl von Dokumenten, die auf einer Dokumentenablage (3) gestapelt abgelegt sind, zuzuführen und gleichzeitig das eine Dokument von den anderen Dokumenten zu trennen;
wobei die Rollenpaare (11, 12, 13) ein Fördermittel zum Fördern bzw. Transportieren des mit Hilfe des Trennmittels (8, 9, 10) getrennten Dokuments zu einer Abtastposition (5) darstellen;
eine einzelne Antriebsquelle (17), um das Trennmittel und das Fördermittel anzutreiben;
eine elektromagnetische Kupplung (22), die auf einer Antriebskraft-Übertragungsstrecke zwischen der Antriebsquelle (17) und dem Trennmittel angeordnet ist und wahlweise eingekuppelt oder ausgekuppelt ist, um auf diese Weise für eine Übertragung der Antriebskraft von der Antriebsquelle (17) zu dem Trennmittel zu sorgen oder diese zu unterbrechen;
ein Sensormittel, das sich stromaufwärts von einer Abtastposition (5) in einer Dokument-Zuführrichtung befindet, um eine vordere Kante und eine hintere Kante des Dokuments (103) zu detektieren; und
ein Steuermittel (17), um eine elektromagnetische Kupplung (22) auszukoppeln, nachdem das Sensormittel das mit Hilfe des Trennmittels getrennte bzw. vereinzelte Dokument nur während eines vorausgewählten Zeitintervalls detektiert hat, wenn das Dokument um eine vorausgewählte Strecke α oder während eines vorausgewählten Zeitraums t gefördert wird.

3. ADF nach Anspruch 2, wobei das Sensormittel einen Ausrichtungssensor (15) umfasst, der auf die vordere Kante und die hintere Kante des zu der Abtastposition (5) geförderten Dokuments anspricht.

4. ADF nach Anspruch 2, weiterhin umfassend ein Eingabemittel, so dass eine Bedienperson der ADF eine Länge des Dokuments eingeben kann.

5. ADF nach Anspruch 2, wobei das Steuermittel (16) eine Länge des Dokuments bestimmt, wenn das Sensormittel die vordere Kante und die hintere Kante eines ersten Dokuments detektiert, die vorausgewählte Strecke α oder den vorausgewählten Zeitraum t in Entsprechung zu der Länge einstellt und die Strecke α oder den vorausgewählten Zeitraum t auf ein zweites Dokument und nachfolgende Dokumente, die gefördert werden sollen, anwendet.

6. ADF nach Anspruch 2, wobei das Steuermittel (16) die vorausgewählte Strecke α oder den vorausgewählten Zeitraum t in Entsprechung zu der Länge des Dokuments variiert.

7. ADF nach Anspruch 2, wobei das Steuermittel (16) **dadurch, dass** zwischen einer Übertragung von Fax-Daten und einem Kopiervorgang unterschieden wird, die elektromagnetische Kupplung (22) für den Fall eines Kopiervorgangs auskuppelt oder die elektromagnetische Kupplung für den Fall einer Übertragung von Fax-Daten auskuppelt, und zwar nur während eines vorausgewählten Zeitraums zwischen einem Abtasten eines ersten Dokuments und einem Abtasten eines zweiten Dokuments.

8. Bilderzeugungsvorrichtung mit einer ADF nach einem der Ansprüche 1 bis 7.

## Revendications

1. ADF (dispositif d'alimentation automatique de documents) comprenant:
un rouleau d'avance (120) pour avancer un document (103) et
un arbre d'entraînement (121) pour amener ledit rouleau d'avance (120) à tourner ;
un élément de support (122) ;
un limiteur de couple (118) ;
un rouleau de prise (123) capable de tourner en étant entraîné dans une relation d'accouplement avec ledit rouleau d'avance (120) et mobile, lorsque ledit élément de support (122) est déplacé angulairement, entre une position de prise (X) où ledit rouleau de prise (123) est en contact avec le document (103) et une position d'attente (Y) où ledit rouleau de prise (123) est espacé dudit document (103) ;
un embrayage électromagnétique (117) pour transmettre le couple de sortie d'une source d'entraînement (115) audit arbre d'entraînement (121), dans lequel ledit arbre d'entraînement (121) supporte un élément de support (122) de façon mobile angulairement ; et
dans lequel ledit rouleau de prise (123) est monté sur ledit élément de support (122) ;
dans lequel, lorsque ledit rouleau de prise (123) est déplacé vers la position d'attente (Y), ledit embrayage électromagnétique (117) interrompt la transmission d'entraînement audit arbre d'entraînement (121), **caractérisé en ce que** le limiteur de couple (118) est un limiteur de couple bidirectionnel qui transfère un couple présélectionné à l'arbre d'entraînement (121) et maintient ledit rouleau de prise (123) à ladite position d'attente (Y) même lorsque l'embrayage électromagnétique (117) interrompt la transmission d'entraînement à l'arbre d'entraînement (121),
dans lequel ledit limiteur de couple (118) est monté sur un corps d'ADF (207) et applique le couple présélectionné audit arbre d'entraînement (121) lorsque ledit arbre d'entraînement (121) est mis en rotation dans une direction vers l'avant (A) et dans une direction vers l'arrière (B).

2. ADF selon la revendication 1, comprenant en outre :
dans lequel le rouleau de prise (8), le rouleau d'avance (9) et le rouleau à rotation en sens inverse (10) représentent des moyens de séparation pour avancer l'un d'un certain nombre de documents empilés sur un bac de documents (3) tout en séparant ledit document des autres documents ;
dans lequel les paires de rouleaux (11, 12, 13) représentent des moyens de transport pour transporter le document séparé par lesdits moyens de séparation (8, 9, 10) vers une position de balayage (5) ;
une source d'entraînement (17) unique pour entraîner lesdits moyens de séparation et lesdits moyens de transport ;
un embrayage électromagnétique (22) positionné sur un trajet de transmission d'entraînement entre ladite source d'entraînement (17) et lesdits moyens de séparation et couplé ou désaccouplé de manière sélective de manière à établir ou interrompre, respectivement, la transmission d'entraînement de ladite source d'entraînement (17) auxdits moyens de séparation ;
des moyens de détection situés en amont d'une position de balayage (5) dans une direction d'avance de document pour détecter un bord avant et un bord arrière du document (103) ; et
des moyens de commande (16) pour désaccoupler un embrayage électromagnétique (22), après que lesdits moyens de détection aient détecté le document séparé par lesdits moyens de séparation seulement pendant une période de temps présélectionnée, lorsque ledit document est transporté d'une distance présélectionnée α ou pendant une période de temps présélectionnée t.

3. ADF selon la revendication 2, dans lequel lesdits moyens de détection comprennent un capteur d'alignement (15) sensible au bord avant et au bord arrière du document transporté vers la position de balayage (5).

4. ADF selon la revendication 2, comprenant en outre des moyens d'entrée pour permettre à un opérateur dudit ADF d'entrer une longueur du document.

5. ADF selon la revendication 2, dans lequel lesdits moyens de commande (16) déterminent une longueur du document lorsque lesdits moyens de détection détectent le bord avant et le bord arrière d'un premier document, fixent la distance présélectionnée α ou la période de temps présélectionnée t en fonction de ladite longueur, et appliquent ladite distance α ou ladite période de temps présélectionnée t à un deuxième document et à des documents successifs devant être transportés.

6. ADF selon la revendication 2, dans lequel lesdits moyens de commande (16) modifient la distance présélectionnée α ou la période de temps présélectionnée t en fonction de la longueur du document.

7. ADF selon la revendication 2, dans lequel, par une distinction entre une transmission de données de télécopie et une copie, lesdits moyens de commande (16) désaccouplent ledit embrayage électromagnétique (22) dans le cas d'une copie ou désaccouplent ledit embrayage électromagnétique dans le cas d'une transmission de données de télécopie seulement pendant une période de temps présélectionnée entre le balayage d'un premier document et le balayage d'un deuxième document.

8. Appareil de formation d'image comportant un ADF selon les revendications 1 à 7.
